# EUROPÄISCHE PATENTSCHRIFT

(11) **EP 1 378 494 B1**
(45) Veröffentlichungstag und Bekanntmachung des Hinweises auf die Patenterteilung: **25.01.2006**
(21) Anmeldenummer: 03450115.5
(22) Anmeldetag: 09.05.2003
(51) Int. Cl.: C02F 11/18, C02F 11/12, F23G 7/00, F23G 5/04, F23G 5/46, F23J 15/00

(54) **Verfahren und Vorrichtung zur Verarbeitung biogener Reststoffe, insbesondere von Schlämmen**
Process and apparatus for treating biogenic residues, in particular sludges
Procédé et installation pour traiter des résidus d'origine biologique, en particulier des boues

(30) Priorität: 29.05.2002 AT 3442002 U
(43) Veröffentlichungstag der Anmeldung: 07.01.2004
(73) Patentinhaber: Tecon Engineering GmbH, 2320 Schwechat (AT)
(72) Erfinder: Ramharter, Peter Michael, Dipl. Ing., 2700 Wr. Neustadt (AT); Bayer, Harald, Ing., 2340 Mödling (AT)

(56) Entgegenhaltungen:
- WO-A-97/08495
- AT-B- 392 961
- AT-B- 406 509
- DE-A- 4 219 584
- DE-A- 19 635 360
- DE-A- 19 724 049
- PATENT ABSTRACTS OF JAPAN vol. 1999, no. 12, 29. Oktober 1999 (1999-10-29) & JP 11 197698 A (ISHIKAWAJIMA HARIMA HEAVY IND CO LTD), 27. Juli 1999 (1999-07-27)

## Beschreibung

Die Erfindung betrifft ein Verfahren zur Verarbeitung biogener Reststoffe, insbesondere von Schlämmen, vorzugsweise im Bereich einer Kläranlage mit Pufferspeicherung und anschließender thermischer Behandlung des getrockneten Gutes, wobei Reststoffe ausgeschleust werden, sowie Reinigung der bei der thermischen Behandlung entstehenden Stoffströme mittels eines primären und eines sekundären Reinigungsschrittes, wobei im primären Reinigungsschritt der Stoffstrom einer Filterung, insbesondere einer Staubabscheidung und im sekundären Reinigungsschritt der Stoffstrom einer Sorption unterzogen wird*,* sowie eine Vorrichtung zur Durchführung des Verfahrens mit Einrichtungen zur Trocknung und Verbrennung der biogenen Reststoffe.
Schlämme aus kommunalen Kläranlagen oder auch industriellen Anlagen werden bekannterweise großtechnisch an zentral eingerichteten Stellen zur Wiederverwendung aufbereitet oder in bspw. Produktgas umgewandelt.
Der teilweise hohe Anteil an biogenen Reststoffen in den Schlämmen macht deren Verwertung sehr schwierig. Zugegebene Substitutionsstoffe zur Stabilisierung erhöhen im allgemeinen bloß die zu entsorgenden Abfallmengen.
Die Entsorgung selbst ist mengenmäßig eingeschränkt, sowohl in der Deponierung auf Halden als auch in der Landwirtschaft, wo insbesondere die im Schlamm enthaltenen Schadstoffe sowie der Trend zur biologischen Landwirtschaft den Einsatz verhindern.
In der Regel erfolgt bei den bekannten Verfahren eine Trocknung des Materials bei höheren Temperaturen für den nachfolgenden Einsatz in Verbrennungsöfen. Die Trocknungsabluft ist dabei aufgrund der Betriebsbedingungen geruchsbebelastet, wodurch diese ebenfalls der Verbrennung zugeführt wird. Damit wird die aus dem Prozess zunächst entfernte Feuchtigkeit wieder zugesetzt, - was den Gesamtprozeß - gesehen vom Standpunkt der Energiebilanz - ad absurdum führt.
Für den Transport der Schlämme zu den zentral eingerichteten Anlagen fallen in der Regel hohe Transportkosten an.
Als großer Nachteil der bekannten Verfahren zur Trocknung des Schlammes mit anschließender thermischer Behandlung ist insbesondere anzusehen, daß die bei der Trocknung entstehende Abluft aufgrund der Schadstoffanreicherungen der Verbrennung geführt wird. Im Gegensatz zum erhofften Effekt, die Verbrennung energietechnisch zu unterstützen, greift der Schritt der Trocknung hier aber nicht, da das Wasser nur scheinbar aus dem Prozeß genommen wird, weil es bei der Verbrennung nun wieder erhitzt bzw. verdampft werden muß.
Beispielsweise beschreibt die AT 406 509 ein Verfahren zur Trocknung und Verbrennung von Schlamm, insbesondere von Klärschlamm, unter Einsatz eines Fließbett-Trockners. Dieser wird mit Abluft aus der Verbrennung beheizt. Die mit Wasser angereicherte Abluft des Trockners wiederum wird in die Verbrennung zurückgeführt. Für deren vollständige Verdampfung ist der gleiche Energieaufwand wie ohne den Schritt der Trocknung notwendig.

Darüberhinaus verursacht die rasche und warme Trocknung, meist in Wirbelschichttrocknern, eine nicht unerhebliche Geruchsbelästigung. Um diese so weit als möglich hintanzuhalten, müssen die entstehenden Gase weiter behandelt werden.
Verfahren, die mit thermischem Aufschluß der Zellen, im allgemeinen mit Hochdruckentwässerung und Pyrolyse arbeiten, benötigen zum Aufheizen ebenfalls wieder einen hohen Anteil an Energie. Darüberhinaus sind auch diese Verfahren mit dem Problem der Geruchsbildung behaftet und bilden also ebenfalls keine Lösung.
Verfahren, welche nur die Trocknung des Eingangsmaterials vorsehen, bieten - auch bei Entzug eines Gutteiles an Wasser - kein zur Wiederverwendung nutzbares bzw. deponiefähiges (gemäß Deponieverordnung ab 2004) Material.
Schließlich können auch bekannte Behandlungen von Schlämmen bei Temperaturen bis etwa 600° C keine Lösung bieten, da bei diesen Verfahren die vollständige Umsetzung von Gefahrenstoffen - bspw. von Medikamentenresten - nicht sichergestellt ist.

Die WO 97/08495 A zeigt ein Verfahren zur Verbrennung von Klärschlamm sowie eine Anlage zur Durchführung des Verfahrens. Insbesondere umfaßt das Verfahren Trocknung und Verbrennung, wobei eine Heißtrocknung des zu behandelnden Gutes mit anschließender Verbrennung in einem Zykloidbrenner dargestellt wird. Basische Stoffe zur Abgasreinigung werden dabei bereits in der Brennkammer zugeführt.

Aus der A T 392 961 B wiederum ist ein Verfahren sowie eine Einrichtung zur Wärmerückgewinnung bei der Entwässerung von Schlämmen bekannt. Der Schlamm wird thermisch getrocknet und verbrannt. Es ist eine zweistufige Wärmerückgewinnung vorgesehen. Das Verfahren ist allerdings speziell auf die Entsorgung brennbarer Schlämme ausgerichtet.
Die Trocknung erfolgt mittels Dampfwirbeltrockner, die Verbrennung in einem Wirbelschichtofen.

Auch aus der DE 42 19584 A1 ist ein Verfahren zur Aufbereitung von Klärschlamm bekannt. Dabei wird der vorentwässerte Klärschlamm unter Zusatz einer organischen Säure auf rund 70 -75°C erwärmt, granuliert und in die flüssige Phase übergeführt. Schwermetalle werden ausgefällt. Der Wirkungsgrad der Schwermetallfällung liegt zwischen 50 und 100%.
Das anfallende Schwermetallkonzentrat ist in eine Sondermüllbehandlung zu verbringen.

Aufgabe der Erfindung ist es daher, ein Verfahren bereitzustellen, welches die bekannten Nachteile vermeidet und eine dezentrale Verarbeitung von biogenen Reststoffen, insbesondere von Schlämmen, unter vollständiger Umsetzung des im eingebrachten Schlamm gespeicherten Energiegehaltes zur Verfügung stellt.

Die Erfindung löst die Aufgabe mit Hilfe eines Verfahrens, gekennzeichnet durch folgende Verfahrensschritte :
- Sammeln biogener Reststoffe mit variablem Trockensubstanzgehalt und anschließender aerober Trocknung in einem Niedertemperaturbereich bis max. 60° - 70° C
- Aufrechterhalten der Trocknung bis Erreichen jenes eine energieautarke thermische Verwertung zulassenden Trocknungsgrades der biogenen Reststoffe,
- Ausschleusen der ausschließlich bei der Trocknung verdampften Wassermenge zusammen mit dem feuchten Luftstrom, ohne Freisetzung freiflüchtiger Verbindungen,
   - Primäres Zwischenspeichern der getrockneten biogenen Reststoffe insbesondere zum Ausgleich unterschiedlicher Trocknungsstufen vor einem sekundären Zwischenspeichern der getrockneten biogenen Reststoffe zur Pufferung,
- Thermische Behandlung des Gutes sowie ggf. von Substitutionsstoffen in mehreren aufeinanderfolgenden thermischen Behandlungsschritten,
- Ausschleusen von Reststoffen aus wahlweise jedem der thermischen Behandlungsschritte
- Energierückgewinnung aus sämtlichen aus dem Prozeß ausgebrachten Stoffströmen, insbesondere durch Überleiten der Energie an ein Wärmetragermedium, wobei *die Energie der Ab* gase einem oder mehreren wärmetauschern zur wahlweisen Gewinnung von Strom, Dampf oder Warmwasser zugeführt wird.

Das Verfahren bietet eine energetisch effiziente und nachhaltige und dezentrale Behandlung von biogenen Reststoffen. Die für die Durchführung des Verfahrens benötigte Energie wird komplett durch Energierückgewinnung abgedeckt. Überschüssige Energie wird intern oder extern weiter verwendet.
Das Verfahren eignet sich insbesondere auch für den Einsatz in kommunalen Kläranlagen unter Bildung von Synergien.

Da das Verfahren Schlämme mit variablem Trockensubstanzgehalt verarbeitet, kann die auf kommunalen Anlagen bestehende Schlammentwässerung optimiert betrieben werden und muß nicht bis an die Grenzen der Leistungsfähigkeit gefahren werden.
Das Verfahren verarbeitet Schlämme jedweder Konsistenz. Auch das Mischen verschiedener Schlämme - mit oder ohne Faulung oder auch mit Industrieschlämmen - ist möglich.
Durch die ausschließlich aerobe Trocknung in einem Niedertemperaturbereich bis max. 60° - 70° C ist gewährleistet, daß es zu keiner Geruchsbelastung der Umgebung kommt. Es müssen somit auch keine Maßnahmen zu deren Vermeidung gesetzt werden.
Die biogenen Reststoffen werden je nach Weiterverwendung gerade soweit getrocknet, daß ihre anschließende thermische Weiterbehandlung unter energieautarken Bedingungen erfolgen kann. Die dabei gewonnene Energie wird mittels Abwärmenutzung verwertet, wodurch einerseits das gesamte Verfahren und andererseits der Wärmebedarf von benachbarten Betriebsanlagen, Nahwärmenetzen etc. abgedeckt werden kann.
Unnötige Energieeinträge werden vermieden. Die maximal gefahrene Temperatur ermittelt sich in Abhängigkeit von den im Schlamm beinhaltenden Schadstoffen und deren Freisetzungstemperaturen.
Die verdampfte Wassermenge wird bei der eingesetzten "kalten" Trocknung direkt an die Umwelt abgeführt. Im Gegensatz dazu führt die bekannte "heiße" Trocknung das verdampfte Wasser nach einem Kondensationsschritt im allgemeinen nochmals dem Brenner zu, wo es erneut verdampft wird.
Die "kalte" Trocknung vermeidet auch jegliche Freisetzung frei flüchtiger Verbindungen. Dem. System wird nur Wasser entzogen und es ist daher Geruchsbildung ausgeschlossen.
Vorteilhafterweise erfolgt die Trocknung unter Zugabe von Frischluft oder aber auch durch Zufuhr von Wärme unterhalb des vorgenannten Temperaturbereiches.
Gegebenenfalls erfolgt eine aerobe Nachstabilisierung des Schlammes.

Nach der Trocknung wird das Material in eine primäre Zwischenspeicherung verbracht, insbesondere zum Ausgleich verschieden rascher Trocknungsschritte und gegebenenfalls zu einer Homogenisierung des Materials nach der Trocknung. Der Ausgleich ist deshalb nötig, weil in diesem Verfahrensschritt auch andere biogene Reststoffe wie Grünschnitt oder Schlamm zugeführt werden können. Diese haben dann die Trocknung nicht durchlaufen, sondern werden hier ungetrocknet beigefügt.
In der sekundären Zwischenspeicherung wird das Material gepuffert, um beispielsweise fördertechnische Probleme beim Transport des Materials vom primären Speicher in den Pufferspeicher entgegen zu wirken. Es entstehen dabei Materialreserven, welche einen kontinuierlichen Ablauf des Verfahrens auch bei Ausfall der Materialförderung über einen längeren Zeitraum sicher stellt.
Die in mehreren Schritten erfolgte thermische Behandlung ermöglicht eine individuelle Abstimmung des Verfahrens auf unterschiedliche Feuchtegehalte des zu behandelnden Materials sowie eine vollständige Zersetzung eventueller Schadstoffe. Aus jedem der thermischen Behandlungsschritte kann, abhängig von der Weiterverwendung des entstandenen Produktes, Material abgezogen werden.
Die Energierückgewinnung besteht im wesentlichen aus einem Wärmetauscher, wobei die Verwertung der Energie aus den heißen Abgasen zur Warmwasser- und/oder Stromgewinnung herangezogen wird.
Das entstehende Abgas wird getrennt nachbehandelt. Einerseits erfolgt eine Filterung der Partikel aus dem Abgasstrom, anderseits eine Sorption der im Abgasstrom gegebenenfalls vorhandenen Schadstoffe.
Je nach Zusammensetzung der durch den Schlamm eingebrachten Schadstoffe kommt dabei ein trockenes, nasses oder halbtrockenes Verfahren zur Anwendung.
Nach einem weiteren Merkmal der Erfindung wird als Eingangsmaterial Naßschlamm bzw. vorentwässerter Schlamm verwendet, mit einem Gehalt an Trockensubstanz zwischen 2% und 35%.
Es ist entsprechend der Erfindung auch vorgesehen, daß die zur Trocknung der biogenen Reststoffe eingesetzte trockene Luft durch die Abwärme der thermischen Behandlungsschritte vorgewärmt wird.
Der zur Trocknung benötigte Luftstrom wird dabei durch die Abwärme aus der thermischen Behandlung vorgewärmt. Die Trocknung kann somit energetisch optimal betrieben werden. Anschließend wird die in die Trocknung eingeleitete vorgewärmte und trockene Luft gemeinsam mit dem entstehenden Wasserstrom als feuchter Luftstrom wieder ausgetragen und an die Umwelt abgegeben.
Nach einem weiteren Merkmal der Erfindung ist vorgesehen, daß zur thermische Behandlung der biogenen Reststoffe aus dem Verfahren erzeugte Energiezufuhr erfolgt.

Das Verfahren kommt dabei *bevorzugt* ohne die Zufuhr von extern erzeugter Energie aus. Ein anderes Merkmal der Erfindung ist es, daß die *Trocknung* der biogenen Reststoffe bis zu maximal jenem Level erfolgt, der eine *energieautarke* nachgeordnete thermische Verwertung zuläßt. Der Sinn liegt darin, die Trocknung nur bis zu jenem Zustand durchzuführen, ab welchem die thermische Behandlung bereits ohne zusätzliche Zuführung externer Energie ablaufen kann.
Durch beliebige Einstellung über das genannte Maß des Trockensubstanzanteiles hinaus kann aber auch der Anteil an verfügbarer Energie am Ende des Verfahrens durchaus variiert werden. Entsprechend dem Verfahren ist auch vorgesehen, daß in der primären Zwischenspeicherung eine Homogenisierung des Gutes erfolgt, daß der primären Zwischenspeicherung zusätzliches biogenes Material zugeführt wird und daß aus dem primären Zwischenspeicher getrocknete biogene Reststoffe ausgeschleust und einer externen Verwendung zugeführt werden.
Ein weiteres Kennzeichen der Erfindung ist es, daß die thermische Behandlung mindestens einen primären und einen sekundären thermischen Behandlungsschritt umfaßt, und daß vor der primären thermischen Behandlung Substitutionsstoffe zugeführt werden.
Nach einem anderen Merkmal der Erfindung ist vorgesehen, daß der primären thermischen Behandlung direkt Substitutionsstoffe zugeführt werden und daß in mindestens einem der thermischen Behandlungsschritte eine Sterilisation des Gutes erfolgt.
Ein anderes Merkmal der Erfindung offenbart, daß die Sorption im zweiten Reinigungsschritt mit Natriumcarbonat erfolgt. Es können auch Kalk, Weißkalkhydrat, Aktivkohle, Soda und Sorbalit eingesetzt werden.
Nach einem weiteren Merkmal der Erfindung ist vorgesehen, daß zur Abgasreinigung Wasser aus dem Klärbecken verwendet wird, wobei die Stoffströme zur Sorption durch das Abwasserbecken der Kläranlage geleitet werden. Dadurch erfolgt die Reinigung der Stoffströme.
Ein anderes Merkmal der Erfindung ist es, daß aufbereitetes Abwasser in den Stoffstrom eingedüst wird.
Kläranlagenwasser wird in beiden Fällen anstelle von Betriebsanlagenwasser verwendet. Durch Ausnutzung vorhandener Ressourcen erfolgt eine Kosteneinsparung.
Ein weiteres Merkmal der Erfindung ist es, daß die Abgasreinigung durch Auftrennung des Stoffstromes in seine Komponenten erfolgt. Die Komponenten können dann weiter verarbeitet werden. Beispielsweise können die verbleibenden CₓH_{y} für Brennstoffzellen verwendet werden.
Die Erfindung sieht weiters auch vor, daß die Energie der Abgase einem oder mehreren Wärmetauschern zur wahlweisen Gewinnung von Strom oder Warmwasser zugeführt wird und daß das Warmwasser zur Erwärmung der Trocknungs- und Verbrennungsluft vorgesehen ist.

Ein zusätzliches Merkmal der Erfindung ist es, daß das Warmwasser zur Errichtung eines dezentralen Wärmenetzes verwendet wird. Vorteilhafterweise kann durch diesen Schritt ein Fernwärme- oder auch Nahwärmenetz gespeist werden
Die Erfindung sieht auch eine Vorrichtung zur Durchführung des Verfahrens vor. Die erfindungsgemäße Vorrichtung umfaßt Einrichtungen zur Trocknung, Speicherung und anschließenden thermischen Behandlung der biogenen Reststoffe, wobei dem thermischen Behandlungssystem Wärmetauschersysteme (9) zur Aufnahme und Weiterverwendung der aus dem System abgezogenen und/ oder freigesetzten Energie nachgeschaltet sind, und daß wenigstens ein erstes Reinigungssystem, vorzugsweise ein Staubabscheider (10) für eine erste Reinigung des Rauchgases und ein zweites Reinigungssystem (11) zur weiteren Abgasreinigung, vorzugsweise durch Sorption, vorgesehen ist und ist dadurch gekennzeichnet, daß die Einrichtung zur Trocknung ein bis max. 60° - 70° C arbeitendes Niedertemperaturtrocknungssystem ist, daß eine primäre und eine sekundäre Speichereinheit zum Zwischenlagern der getrockneten biogenen Reststoffe vorgesehen sind, daß zwischen den Speichereinheiten ein Fördersystem für die getrockneten biogenen Reststoffe vorgesehen ist *und* daß das thermische Behandlungssystem zwei voneinander getrennte thermische Behandlungszonen umfaßt. Dem thermischen Behandlungssystem sind dabei also in an sich bekannter Weise Wärmetauschersysteme zur Aufnahme und Weiterverwendung der aus dem System abgezogenen und/ oder freigesetzten Energie nachgeschaltet. Es sind auch ein erstes Reinigungssystem, vorzugsweise ein Staubabscheider für eine erste Reinigung des Rauchgases und ein zweites Reinigungssystem zur weiteren Abgasreinigung, vorzugsweise durch Sorption vorgesehen.
Erfindungsgemäß sind auch Einrichtungen zur Ausbringung der feuchten Luft sowie des Wasserstromes aus dem Niedertemperaturtrocknungssystem vorgesehen.
Nach einer weiteren Ausbildung der Erfindung ist geoffenbart, daß das Niedertemperaturtrocknungssystem ein Kaltluft- oder Frischluft-Trockner bzw. ein solarer Trockner ist oder aus Trocknungsfeldern besteht.
Ein weiteres Merkmal der Erfindung ist es, daß die primäre Speichereinheit zum Zwischenlagern ein Homogenisierungsspeicher ist. Die sekundäre Speichereinheit wird in an sich bekannter Weise als ein Pufferspeicher zur Sicherstellung einer kontinuierlichen thermischen Behandlung realisiert.
Der Materialtransport zwischen den beiden Speichern kann manuell oder automatisiert erfolgen. Je nach Wahl des Förderverfahrens ist eine Steuerung der Homogenisierung möglich.
Nach einem anderen Merkmal der Erfindung ist vorgesehen, daß die primäre Speichereinheit eine Zuführvorrichtung für weitere biogene Reststoffe umfaßt. Diese können beispielsweise Grünschnitt oder Schlamm sein.
Die primäre Speichereinheit weist nach einem weiteren Merkmal der Erfindung auch eine Vorrichtung zum Ausschleusen des Materials auf. In dieser Phase ausgeschleuster Schlamm kann bspw. zur Weiterverwendung in kalorische Kraftwerke oder Zementfabriken verbracht werden, in Abhängigkeit vom Grad der Homogenisierung.

Ein weiteres Merkmal der Erfindung ist es, daß zwischen der sekundären Speichereinheit und dem thermischen Behandlungssystem eine Zuführung für Substitutionsstoffe vorgesehen ist. Diese Substitutionsstoffe können Grünschnitt oder Rechengut aus der Kläranlage sein. Eben sogut können aber auch Stoffe zur Sterilisation beigegeben werden oder Schritte, die speziell auf die thermische Behandlung zugeschnitten sind, angewendet werden.
Nach einem weiteren Merkmal der Erfindung wird das thermische Behandlungssystem mit Erdgas und/oder Faulgas betrieben. Die Brenner der thermischen Anlage sind dabei sowohl für Erdgas als auch für Faulgas ausgelegt. Der Einsatz von Faulgas ist insbesondere bei Vorhandensein einer anlagenbedingten großen Menge an Faulgas anzuraten, wodurch es zu einer Optimierung der Energiebilanz der Anlage kommt.
Falls die Faulgasmenge nicht ausreicht, oder technische Störungen zu einem Mangel an Faulgas führen, können die Brenner mit Erdgas arbeiten. Der Einsatz von Erdgas dient somit der Anlagensicherheit.
Das thermische Behandlungssystem umfaßt in an sich bekannter Weise eine Vorrichtung zum Ausbringen von Asche, welche vorzugsweise eine wassergekühlte Förderschnecke ist.
Die aus dem thermischen Behandlungssystem ausgebrachten heißen Abgase durchlaufen da*bei* erst einen Staubabscheider, vorzugsweise keramische Filterkerzen, Heißgasfilter, Heißgaszyklon, Elektrofilter, beschichtete Filtertücher oder andere thermisch beständige und zur Filterung geeignete Materialien, wobei eine Austragevorrichtung für den Staub vorgesehen ist.
Nach einem anderen Merkmal der Erfindung ist vorgesehen, daß die Abgasreinigung ein die Abgase in das Klärwasserbecken führendes Belüftungssystem umfaßt. Dabei ist es wesentlich, zu kontrollieren, daß das Reinigungsvermögen der Kläranlage nicht beeinträchtigt wird.
Ein weiteres Merkmal der Erfindung ist es, daß die Abgasreinigung ein Klärwasser in den Abgasstrom führendes Eindüsungssystem umfaßt.
Die Verwendung von Kläranlagenwasser anstelle von allgemeinem Betriebswasser bedingt durch Ausnutzung der vorhandenen Ressourcen jedenfalls eine Kosteneinsparung.
Weiters sieht die Erfindung vor, daß die Abgasreinigung eine Vorrichtung zur Auftrennung des Abgases in seine Komponenten umfaßt und daß eine Brennstoffzelle zur Verwertung der aufgetrennten Abgaskomponenten vorgesehen ist.
Ein anderes Merkmal der Erfindung ist es, daß mit einer Temperaturregelung versehene Einrichtungen zur Weiterleitung von Wärmeträgermedien an das Niedertemperaturtrocknungssystem sowie das thermische Behandlungssystem vorgesehen sind. Dadurch erfolgt eine kontinuierliche Unterstützung der Trocknung und eine interne Wiederverwendung überschüssiger Wärme. Idealerweise ist die Temperaturregelung in Kombination mit einem Wärmetauscher ausgebildet. Sowohl dem Niedertemperaturtrocknungssystem als auch dem thermischen Behandlungssystem wird ausschließlich getrocknete, vorgewärmte Luft zugeführt.
Falls keine zusätzliche Energie, insbesondere im Niedertemperaturtrocknungssystem benötigt wird, wird die Energie entweder nach draußen gefahren oder in den Kreislauf zurück verbracht.

Zur gekoppelten Strom- und Warmwassererzeugung *ist in* an sich bekannter Weise eine Kraft-Warme Kopplungsanlage vorgesehen, wobei die Kraft-Wärme Kopplungsanlage eine auf dem ORC-Prozeß basierende Anlage ist und die Stromerzeugungseinrichtung der Kraft-Wärme Kopplungsanlage eine Mikrogasturbine ist. Weiters kann auch ein Dampfkolbenmotor, ein Dampfschraubenmotor oder eine Dampfturbine damit betrieben werden.

Ebensogut kann hier auch ein Stirlingmotor eingesetzt werden.

Nach einem abschließenden Merkmal der Erfindung ist auch eine Einrichtung zum Transport von Warmwasser an eine Vorrichtung zur Warmwasserverwertung, vorzugsweise ein dezentrales Warmenetz, vorgesehen.
Der Wärmetauscher kann auch Warmwasser ohne den Umweg über ein Tragermedium erzeugen.
Die Art der Weiterverwendung der aus den heißen Abgasen gewonnenen Energie hängt insbesondere von der Anlagengröße und dem daraus resultierenden Energieinhalt der Abgase als auch vom Standort der Anlage ab. Bei sehr großem Wasserbedarf für interne Heizzwecke der Kläranlage, beispielsweise für den Faulturm, die Temperierung des Beckenwassers oder des Betriebsgebäudes oder aber auch für den Aufbau eines Fernwärmenetzes für die Nahversorgung, sollte reine Warmwassergewinnung gewählt werden.
Die Variante einer gekoppelten Strom- und Warmwassererzeugung eignet sich insbesondere für die Eigenvorsorge der Anlage. Mögliche Systeme für die Kraft-Wärme Kopplung wie oben beschrieben.

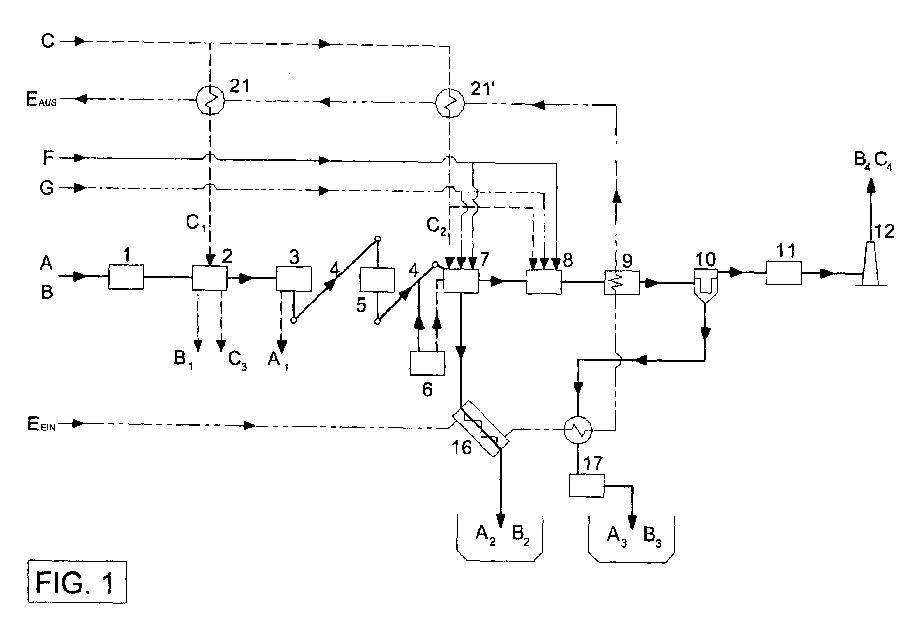

Die Erfindung wird nun im Folgenden anhand eines Ausführungsbeispieles unter Zuhilfenahme der angeschlossenen Zeichnung näher beschrieben.
Es zeigen
Fig.1 eine schematische Darstellung der erfindungsgemäßen Vorrichtung;
Fig.2 eine schematische Darstellung eines Details gemäß Fig.1 und
Fig.3 eine weitere schematische Darstellung eines Details gemäß Fig.1.

Aus Trockenschlamm A und zugeführtem Wasser B bestehender Naßschlamm wird dem. Naßschlammspeicher 1 zugeführt und in diesem zwischengelagert. Prinzipiell kann der Naßschlammspeicher Schlämme jedweder Konsistenz übernehmen. Auch die Mischung von Schlämmen unterschiedlicher Konsistenz ist vorgesehen.
Aus dem Naßschlammspeicher 1 wird der Schlamm der Trocknung zugeführt. Die Trocknung erfolgt mittels eines Niedertemperaturtrocknungssystems 2, welches den Schlamm in einer Umgebung von max. 60 - 70° C langsam unter aeroben Zuständen trocknet. Das Trocknungssystem 2 ist modular aufgebaut. Die Erweiterung der Trocknungskapazifät ist ebenso wie eine A daptierung für Naßschlamm mit höherem Wassergehalt möglich. Die für die Trocknung benötigte Luft wird durch die Abwärme des thermischen Behandlungssystemes 7,8 vorgewärmt und dem Trocknungssystem zugeführt. Vom zugeführten Naßschlammstrom wird Wasser B1 aus dem Niedertemperaturtrocknungssystem 2 ausgeschleust. Der getrocknete Schlamm wird in den primären Speicher 3 weitergeleitet. Die in das Trocknungssystem 2 eingeleitete trockene und vorgewärmte Luft C1 wird gemeinsam mit dem Wasserstrom B1 als feuchter Luftstrom aus dem Trockensystem 2 ausgebracht und an die Umwelt abgegeben. Das Trocknungssystem 2 ist ein solarer Trockner oder bekannte Kaltluft- bzw. Umluft-Trockner oder auch ein beliebig erweiterbares Trocknungsfeld. Im Trocknungssystem 2 wird die Trocknung nur soweit durchgeführt, daß die folgende thermische Behandlung weitgehend energieautark ablaufen kann.
Der aus dem Niedertemperaturtrocknungssystem 2 in den primären Zwischenspeicher 3 weitergeleitete Schlamm wird hier zwischengespeichert. Gegebenenfalls werden weitere biogene Reststoffe wie Grünschnitt oder Schlamm von anderer Konsistenz zugeführt. Aus dem primären Zwischenspeicher 3 kann der Schlamm auch bereits im Schlammstrom A1 ausgebracht werden. Hier ausgeschleuster Schlamm wird der Nutzung bspw. in kalorischen Kraftwerken oder Zementfabriken zugeführt.
Vom primären Zwischenspeicher 3 gelangt der Schlamm über ein Fördersystem 4 in den sekundären Zwischenspeicher 5. Der als Puffer arbeitende sekundäre Zwischenspeicher 5 dient zum Ausgleich fördertechnischer Schwierigkeiten. Auf der Förderstrecke zwischen dem sekundären Zwischenspeicher 5 und dem primären thermischen Behandlungssystem 7 ist eine Vorrichtung 6 zur Zugabe von Substitutionsstoffen vorgesehen. Die Zugabe kann wahlweise vor dem oder in das primäre thermische Behandlungssystem 7 erfolgen. Das primäre thermische Behandlungssystem 7 reagiert flexibel auf unterschiedlich hohe Feuchtegehalte des zu verbrennenden Schlammes. Der in die thermische Behandlungszone eingebrachte Luftvolumenstrom C2 wird vor seinem Eintritt mittels Energierückgewinnung aus den heißen Abgasen vorgewärmt. Weiters wird aus der thermischen Behandlungszone heiße Asche A2 ausgeschleust. Die darin enthaltene Energie wird über den Wasserstrom B2 einer wassergekühlten Förderschnecke 16 abgeführt. Die bei der Kühlung der Asche gewonnene Energie kann auch im System verbleiben und mit E_{EIN} weitergeleitet werden.
Im sekundären thermischen Behandlungssystem 8 erfolgt eine vollständige Zersetzung bzw. Vergasung der in der primären thermische Behandlungszone 7 vorbehandelten Materialien bei mindestens 850° C . Die Brenner sowohl des primären als auch des sekundären thermischen Behandlungssystems 7,8 sind auf Faulgas G und Erdgas F ausgelegt.
Vom sekundären thermischen Behandlungssystem 8 gelangen die Abgase idealerweise, um einen möglichst hohen Wirkungsgrad zu erzielen, in die Energierückgewinnung 9.
An diese schließt die Abgasreinigung 10,11 an. Das Abgas wird in mehreren Reinigungsstufen gereinigt. Als erste Stufe ist ein Staubabscheider 10 aus thermisch beständigem Material, vorzugsweise keramische Filterkerzen, eingesetzt. Er trennt den Stoffstrom Staub A3 aus dem Ab gas ab und führt diesen aus dem System. Es ist eine Austragevorrichtung 17 für den Staub vorgesehen, deren konstruktive Ausführung insbesondere auf die leichte Flugfähigkeit des Staubes Rücksicht nimmt. Wärme kann wiederum über den Strom B3 nach draußen abgeführt oder durch E_{EIN} im System verbleiben.
Der Staubabscheider für eine erste Reinigung des Rauchgases kann anstelle der eingesetzten keramischen Filterkerzen auch ein Heißgasfilter, Heißgaszyklon oder beschichtete Filtertücher sein.
Der Abgasstrom wird aus dem Staubabscheider 10 weiter in eine Vorrichtung 11 zur Sorption geführt.

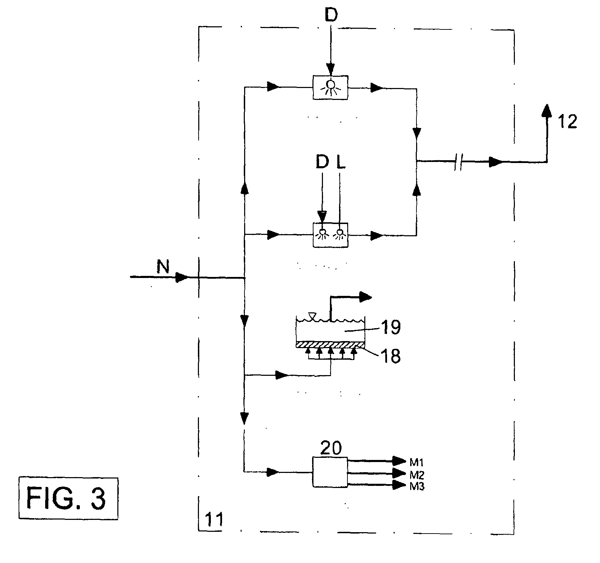

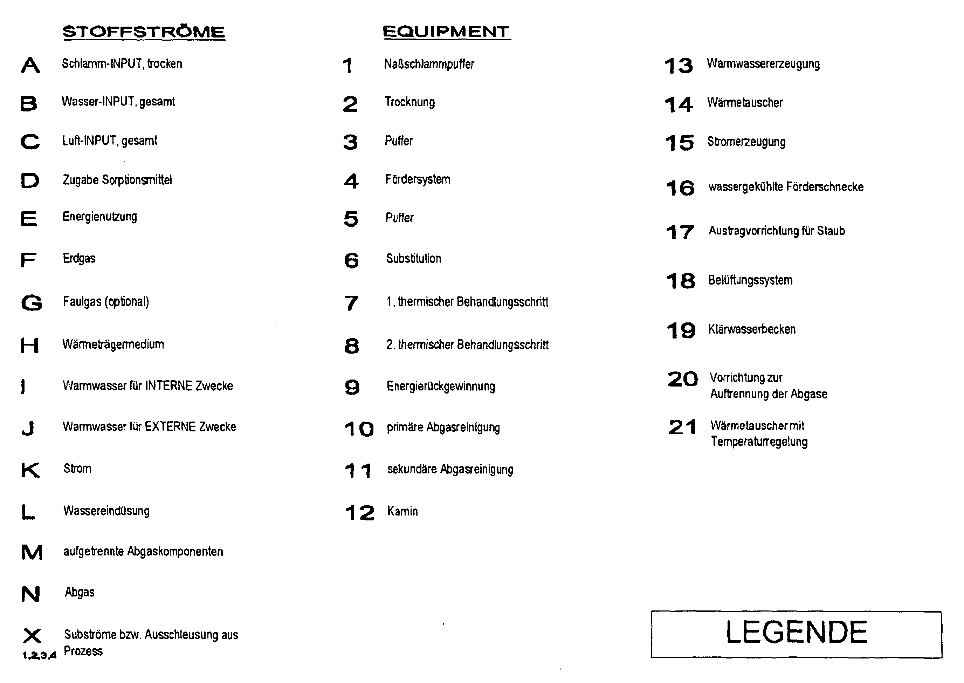

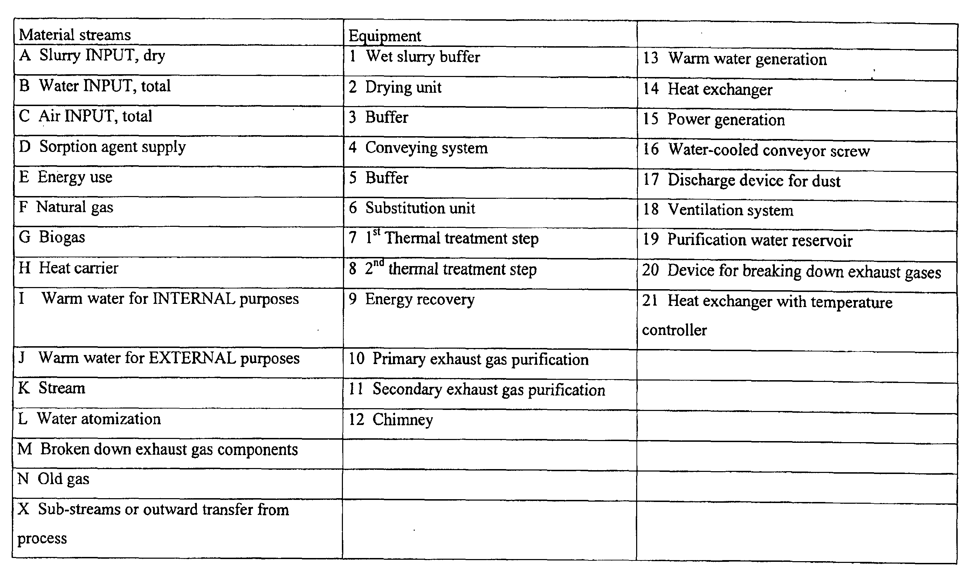

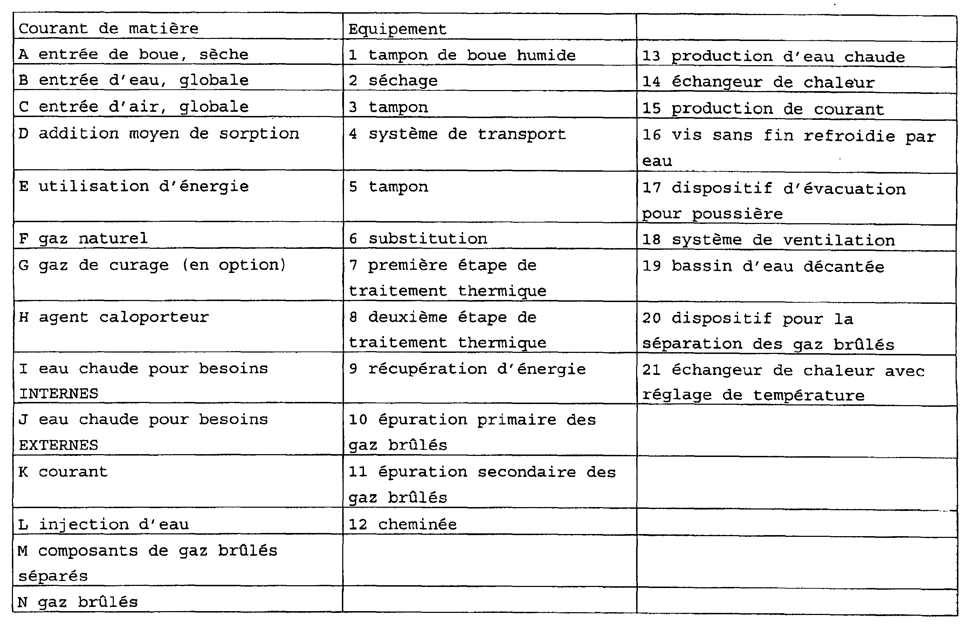

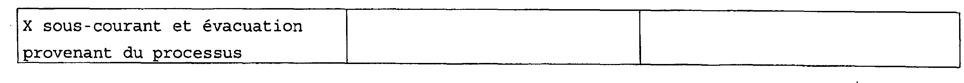

Fig. 3 zeigt verschiedene Ausführungsformen des zweiten Reinigungssystemes 11.
Der heiße Abgasstrom N durchläuft dabei folgende Möglichkeiten :
- ein trockenes Sorptionsverfahren, bei welchem trockenes Sorptionsmittel D, bspw. Kalk, beigegeben wird
- ein halbtrockenes Verfahren, bei welchem sowohl trockenes Sorptionsmittel D, bspw. Kalk mit Aktivkohle, in Verbindung mit eingedüstem Waschwasser I, bspw. Nutzwasser oder Klärwasser, beigegeben wird. Es entsteht dabei kein Abwasser, weil das Waschwasser verdampft.
- Abgasreinigung im Klärwasserbecken. Über Belüftungssysteme 18 wird das Abgas in das Klärwasserbecken 19 geleitet. Die im Abgas enthaltenen Schadstoffe werden dabei vom Klärwasser aufgenommen.
- Als vierte Variante ist eine Vorrichtung 20 zur Auftrennung des Abgases in seine Komponenten M vorgesehen.

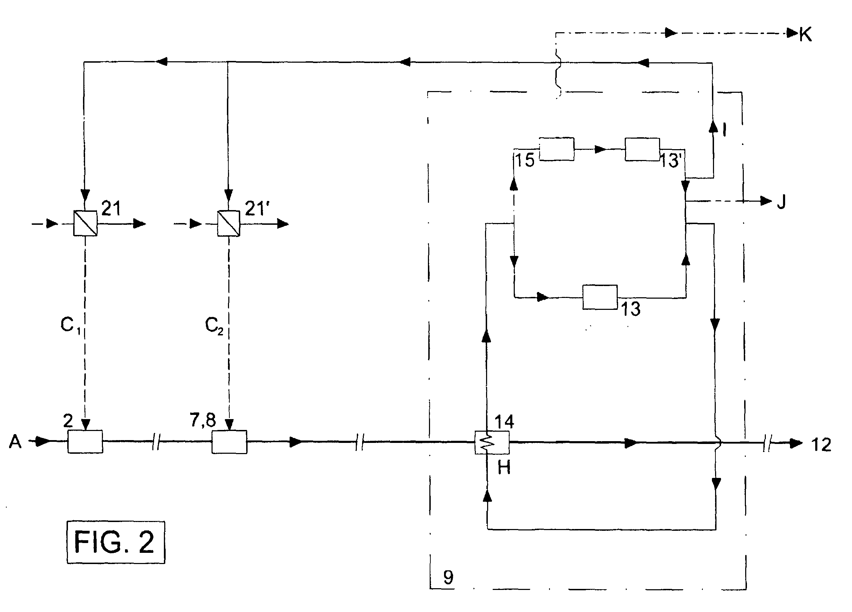

Die Energierückgewinnung 9 ist detailliert schließlich in der Fig. 2 dargestellt.
Der in den Wärmetauscher 14 gelangende Energiestrom der heißen Abgase wird dabei in Variante 1 in Form einer reinen Warmwassererzeugung 13 und in Variante 2 in Form einer gekoppelten Stromerzeugung 15 und Warmwassererzeugung 13' dargestellt.
Die Stoffströme zeigen, daß die Energie der heißen Abgase an ein Wärmeträgermedium H im Wärmetauscher 14 übertragen werden. Das Wärmeträgermedium dient bei Variante 1 der Warmwassererzeugung J für externe Verwendung, und zur Warmwassererzeugung I für interne Zwecke, wie der Erwärmung von Trocknungsluft oder Verbrennungsluft.
Bei Variante 2 wird zunächst in 15 Strom und anschließend in 13' Warmwasser erzeugt.
Die in das Niedertemperaturtrocknunssystem 2 bzw. die thermischen Behandlungssysteme 7,8 rückgeführte trockene Luft kann mittels Temperaturregler 21, 21' eingestellt werden. Diese Temperaturregler sind idealerweise mit Wärmetauschern gekoppelt.
Die Wärmetauschersysteme 9 können auch zwischen den beiden Abgasreinigungssystemen 10, 11 angeordnet sein. Die Anordnung richtet sich beispielsweise nach einer notwendigen Abkühlung des Abgasstromes N vor seiner Zuführung in das verwendete Reinigungssystem.
Aus dem System austretende Abgase werden über den Kamin 12 mittels der Stoffströme B4 [ Wasser] und C4 [Luft] nach draußen geführt.

## Patentansprüche

1. Verfahren zur Verarbeitung biogener Reststoffe, insbesondere von Schlämmen, vorzugsweise im Bereich einer Kläranlage, mit Pufferspeicherung und anschließender thermischer Behandlung des getrockneten Gutes, wobei Reststoffe ausgescheaust werden, sowie Reinigung der bei der thermischen Behandlung entstehenden Stoffströme mittels eines primären und eines sekurrdären Reinigungsschrittes, wobei im primären Reinigungsschritt der Stoffstrom einer Filterung, insbesondere einer Staubabscheidung und im sekundären Reinigungsschritt der Stoffstrom einer Sorption unterzogen wird, **gekennzeichnet durch** folgende Verfahrensschritte :
- Sammeln biogener Reststoffe mit variablem Trockensubstanzgehalt und anschließende aerobe Trocknung in einem Niedertemperaturbereich bis max. 60° - 70° C
- Aufrechterhalten der Trocknung bis zum Erreichen jenes eine energieautarke thermische Verwertung zulassenden Trocknungsgrades der biogenen Reststoffe.
- Ausschleusen der ausschließlich bei der Trocknung verdampften Wassermenge zusammen mit dem feuchten Luftstrom, ohne Freisetzung freiflüchtiger Verbindungen,
- Primäres Zwischenspeichern der getrockneten biogenen Reststoffe, insbesondere zum Ausgleich unterschiedlicher Trocknungsstufen *vor* einem sekundären Zwischenspeichem der getrockneten biogenen Reststoffe zur Pufferung,
- Thermische Behandlung des Gutes in mehreren aufeinanderfolgenden thermischen Behandlungsschritten,
- Ausschleusen von Reststoffen aus wahlweise jedem der thermischen Behandlungsschritte,
- Energierückgewinnung aus samüiehen aus dem Prozeß ausgebrachten Stoffströmen, insbesondere **durch** Überteilen der Energie an ein Wärmeträgermedium, wobei die Energie der Abgase einem oder mehreren Wärmetauschern zur wahlweisen Gewinnung von Strom, Dampf oder Warmwesser zugeführt wird.

2. Verfahren nach Anspruch 1, **dadurch gekennzeichnet, daß** als Eingangsmaterial Naßschlamm oder vorentwässerter Schlamm, mit einem Gehalt an Trockensubanz zwischen 2% und 35% verwendet wird.

3. Verfahren nach Anspruch 1, **dadurch gekennzeichnet, daß** die zur Trocknung der biogenen Reststoffe eingesatzte trockene Luft durch die Abwärme der thermischen Behandlungsschritte vorgewannt wird.

4. Verfahren nach Anspruch 1, **dadurch gekennzeichnet, daß** zur thermischen Behandlung der biogenen Reststoffe *aus dem Verfahren* erzeugte Energie verwendet wird.

5. Verfahren nach Anspruch 1, **dadurch gekennzeichnet, daß** bei der primären Zwischenspeicherung eine Homogenisierung des Gutes erfolgt.

6. Verfahren nach Anspruch 1, **dadurch gekennzeichnet, daß** der primären Zwischenspeicherung zusätzliches biogenes Material zugeführt wird.

7. Verfahren nach Anspruch 1, **dadurch gekennzeichnet daß** aus dem primären Zwischenspeicher getrocknete biogene Reststoffe ausgeschleust und einer externen Verwendung zugeführt werden.

8. Verfahren nach Anspruch 1, **dadurch gekennzeichnet daß** die thermische Behandlung mindestens einen primären und einen sekundären thermischen Behandlungsschritt umfaßt.

9. Verfahren nach Anspruch 9, **dadurch gekennzeichnet, daß** vor der primären thermischen Behandlung Substitutionsstoffe zugeführt werden.

10. Verfahren nach Anspruch 8 oder 9, **dadurch gekennzeichnet, daß** der primären thermischen Behandlung direkt Substitutionsstoffe zugeführt werden.

11. Verfahren nach Anspruch 8, **dadurch gekennzeichnet, daß** in mindestens einem der thermischen Behandlungsschritte eine Sterilisation des Gutes erfolgt.

12. Verfahren nach Anspruch 1, mit einer Sorption als Reinigungsschritt, **dadurch gekennzeichnet, daß** die Sorption mit Natriumcarbonat erfolgt.

13. Verfahren nach Anspruch 1, **dadurch gekennzeichnet, daß** zur Abgasreinigung Wasser aus dem Klärbecken verwendet wird.

14. Verfahren nach Anspruch 13, **dadurch gekennzeichnet, daß** die Stoffströme zur Sorption durch das Abwasserbecken der Kläranlage geleitet werden.

15. Verfahren nach Anspruch 13, **dadurch gekennzeichnet daß** Abwasser in den Stoffstrom eingedüst wird.

16. Verfahren nach Anspruch 1, **dadurch gekennzeichnet, daß** die Abgasreinigung durch Auftrennung des Stoffstromes in seine Komponenten erfolgt.

17. Verfahren nach Anspruch 1, **dadurch gekennzeichnet, daß** das Warmwasser zur Erwärmung der Trocknungs- und Verbrennungsluft vorgesehen ist.

18. Verfahren nach Anspruch 1, **dadurch gekennzeichnet, daß** das Warmwasser zur Errichtung eines dezentralen Wärmenetzes verwendet wird.

19. Vorrichtung zur Durchfühung des Verfahrens mit Einrichtungen zur Trocknung, Speicherung und anschließenden thermischen Behandlung der biogenen Reststoffe, wobei dem thermischen Behandlungssystem Wärmetauschersystems (9) zur Aufnahme und Weiterverwendung der aus dem System abgezogenen und/ oder freigesetzten Energie nachgeschaltet sind, und daß wenigstens ein erstes Reinigungssystem, vorzugsweise ein Staubabscheider (10) für eine erste Reinigung das Rauchgases und ein zweites Reinigungssystem (11) zur weiteren Abgasreinigung, vorzugsweise durch Sorption, vorgesehen ist, **dadurch gekennzeichnet, daß** die Einrichtung zur Trocknung (2) ein bis max. 60° - 70° C arbeitendes Niedertemperaturtrocknungssystem ist, daß eine primäre und eine sekundäre Speichereinheit (3,5) zum Zwischenlagern der getrockneten biogenen Reststoffe vorgesehen sind, daß zwischen den Speichereinheiten (3,5) ein Fördersystem (4) für die getrockneten biogenen Reststoffe vorgesehen ist, *d*aß Einrichtungen zur Ausbringung der feuchten Luft sowie das Wasserstromes aus dem Niedertemperaturtrocknungssystem (2) vorgesehen sind und daß das thermische Behandlungssystem mehrere thermische Behandlungszonen (7,8) umfaßt.

20. Vorrichtung nach Anspruch 19, **dadurch gekennzeichnet, daß** das Niedertemperaturtrocknungssystem (2) aus einem Kaltluft- oder Frischluft-Trockner einem solaren Trockner oder Trocknungsfeldern besteht.

21. Vorrichtung nach Anspruch 19, **dadurch gekennzeichnet, daß** die primäre Speichereinheit (3) zum Zwischenlagern ein Homogenisierungsspeicher ist.

22. Vorrichtung nach Anspruch 19 oder 21, **dadurch gekennzeichnet, daß** die primäre Speichereinheit (3) eine Zuführvorrichtung für weitere biogene Reststoffe umfaßt.

23. Vorrichtung nach Anspruch 19 oder 21, **dadurch gekennzeichnet, daß** die primäre Speichereinheit (3) eine Vorrichtung zum Ausschleusen des Materials aufweist.

24. Vorrichtung nach Anspruch 19, **dadurch gekennzeichnet, daß** zwischen der sekundären Speichereinheit (5) und dem thermischen Behandlungssystem (7,8) eine Zuführung (6) für Substitutionsstoffe vorgesehen ist.

25. Vorrichtung nach Ampruch 19, **dadurch gekennzeichnet, daß** das thermische Behandlungssystem (7,8) Brenner zur Verarbeitung von Erdgas und/oder Faulgas umfaßt.

26. Vorrichtung nach Anspruch 19, **dadurch gekennzeichnet, daß** mit einer Temperaturregelung (21, 21') versehene Einrichtungen (1) zur Weiterleitung von Wärmeträgermedien an das Niedertemperaturtrocknungssystem (2) sowie das thermische Behandlungssystem (7,8) vorgesehen sind.

27. Vorrichtung nach Anspruch 19, **dadurch gekennzeichnet, daß** die Abgasreinigung ein die Abgase in das Klärwasserbecken (19) führendes Belüftungssystem (18) umfaßt.

28. Vorrichtung nach Anspruch 19, **dadurch gekennzeichnet, daß** die Abgasreinigung ein Klärwasser in den Abgasstrom führendes Eindüsungssystem (L) umfaßt.

29. Vorrichtung nach Anspruch 19, **dadurch gekennzeichnet, daß** die Abgasreinigung eine Vorrichtung (20) zur Auftrennung des Abgases in seine Komponenten (M) umfaßt.

30. Vorrichtung nach Anspruch 26, **dadurch gekennzeichnet, daß** die Temperaturregelung (21, 21') in Kombination mit einem Wärmetauscher ausgebildet ist.

31. Vorrichtung nach Anspruch 29, **dadurch gekennzeichnet, daß** eine Brennstoffzelle zur Verwertung der aufgetrennten Abgaskomponenten (M) vorgesehen ist.

32. Vorrichtung nach Anspruch 19, **dadurch gekennzeichnet daß** eine Einrichtung (J) zum Transport von Warmwasser an eine Vorrichtung zur Warmwasserverwertung, vorzugsweise ein dezentrales Wärmenetz vorgesehen ist.

## Claims

1. A method for processing biogenic residues, in particular of sludge, preferably in the area of a sewage treatment plant, with buffer storage and subsequently thermal treatment of the dried material, wherein residues are transferred out, as well as for cleaning the material streams arising during thermal treatment in a primary and a secondary cleaning step, wherein the material stream is subjected to filtering, in particular dust removal, in the primary cleaning step, and the material stream is subjected to sorption in the secondary cleaning step, **characterized by** the following procedural steps:
- accumulation of biogenic residues with variable dry substance content and subsequent aerobic drying in a low-temperature range of up to a max. 60°-70°C;
- continued drying until the biogenic residues have reached a level of drying that permits an energy-autonomous thermal utilization;
- outward transfer of water quantity evaporated exclusively while drying along with the moist air stream without releasing freely volatile compounds,
- primary intermediate storage of the dried biogenic residues, in particular to balance out different drying stages before a secondary intermediate storage of the dried biogenic residues for buffering purposes;
- thermal treatment of the material in several sequential thermal treatment steps;
- outward transfer of residues, optionally from each of the thermal treatment steps;
- energy recovery from any of the material streams removed from the process, in particular by routing the energy to a heat carrier, wherein the energy of the exhaust gases is relayed to one or more heat exchangers for optionally obtaining current, steam or warm water.

2. The method according to claim 1, **characterized in that** wet slurry or pre-dewatered slurry with a content of dried substance ranging between 2% and 35% is used as the parent material.

3. The method according to claim 1, **characterized in that** the dry air used for drying the biogenic residues is prewarmed by the exhaust heat of the thermal treatment steps.

4. The method according to claim 1, **characterized in that** energy generated from the method is used for thermally treating the biogenic residues.

5. The method according to claim 1, **characterized in that** the material is homogenized in the primary intermediate storage unit.

6. The method according to claim 1, **characterized in that** additional biogenic material is routed to primary intermediate storage unit.

7. The method according to claim 1, **characterized in that** dried biogenic residues are outwardly transferred from the primary intermediate storage unit and relayed to external application.

8. The method according to claim 1, **characterized in that** thermal treatment encompasses at least a primary and a secondary thermal treatment step.

9. The method according to claim 8, **characterized in that** substitution materials are supplied before primary thermal treatment.

10. The method according to claim 8 or 9, **characterized in that** substitution materials are directly supplied to the primary thermal treatment.

11. The method according to claim 8 or 9, **characterized in that** the material is sterilized in at least one of the thermal treatment steps.

12. The method according to claim 1, **characterized in that** the sorption takes place with sodium carbonate.

13. The method according to claim 1, **characterized in that** water from the settling tank is used for exhaust gas purification.

14. The method according to claim 13, **characterized in that** the material streams for sorption are passed through the wastewater reservoir of the sewage treatment plant.

15. The method according to claim 13, **characterized in that** wastewater is atomized into the material stream.

16. The method according to claim 1, **characterized in that** exhaust gas purification takes place by breaking up the material stream into its components.

17. The method according to claim 1, **characterized in that** warm water is provided for warming the drying and combustion air.

18. The method according to claim 1, **characterized in that** warm water is used to set up a decentralized heating network.

19. A device for executing the method with equipment for drying, storing and subsequently thermally processing the biogenic residues, wherein heat exchanger systems (9) for receiving and recycling the energy removed and/or released from the system are placed downstream from the thermal treatment system, and that at least a first cleaning system, preferably a dust separator (10) for first cleaning the flue gas and a second cleaning system (11) for continued exhaust gas cleaning, preferably via sorption, are provided, **characterized in that** the device for drying (2) is a low-temperature drying system that operates up to a max. of 60°-70°C, that a primary and secondary storage unit (3, 5) are provided for intermediately storing the dried biogenic residues, that a conveying system (4) is provided for the dried biogenic residues between the storage units (3, 5), that devices are provided for removing the moist air and water stream from the low-temperature drying system (2), and that the thermal treatment system comprises several thermal treatment zones (7, 8).

20. The device according to claim 19, **characterized in that** the low-temperature drying system (2) consists of a cold air or fresh air dryer, a solar dryer or drying fields.

21. The device according to claim 19 or 21, **characterized in that** the primary storage unit (3) for intermediate storage is a homogenization storage unit.

22. The device according to claim 19 or 21, **characterized in that** the primary storage unit (3) is a device for supplying additional biogenic residues.

23. The device according to claim 19, **characterized in that** the primary storage unit (3) is a device for outwardly transferring the material.

24. The device according to claim 19, **characterized in that** a feed unit (6) for substitution materials is provided between the secondary storage unit (5) and the thermal treatment system (7, 8).

25. The device according to claim 19, **characterized in that** the thermal treatment system (7, 8) encompasses burners for processing natural gas and/or biogas.

26. The device according to claim 19, **characterized in that** devices (1) equipped with a temperature controller (21, 21') are provided for relaying heat carrier media to the low-temperature drying system (2) and the thermal treatment system (7, 8).

27. The device according to claim 19, **characterized in that** the exhaust gas purification unit comprises a ventilation system (18) that guides the exhaust gases into the purification water reservoir (19).

28. The device according to claim 19, **characterized in that** the exhaust gas purification unit comprises an atomization system (L) that guides purification water into the exhaust gas stream.

29. The device according to claim 19, **characterized in that** the exhaust gas purification unit comprises a device (20) for breaking up the exhaust gas into its components (M).

30. The device according to claim 26, **characterized in that** the temperature controller (21, 21') is designed in combination with a heat exchanger.

31. The device according to claim 29, **characterized in that** a combustion cell is provided for utilizing the broken down exhaust gas components (M).

32. The device according to claim 19, **characterized in that** a device (J) is provided for transporting warm water to a warm water utilization unit, preferably a decentralized heating network.

## Revendications

1. Procédé pour le traitement de matières résiduelles biogènes, en particulier de boues, de préférence dans la zone d'une installation d'épuration, avec un stockage tampon et un traitement thermique consécutif de la marchandise séchée, les matières résiduelles étant évacuées, et le nettoyage des courants de produit se formant lors du traitement thermique au moyen d'une étape de nettoyage primaire et d'une étape de nettoyage secondaire, le courant de produit étant soumis à un filtrage, en particulier une séparation de poussière lors de l'étape de nettoyage primaire et le courant de produit étant soumis à une sorption lors de l'étape de nettoyage secondaire, **caractérisé par** les étapes de procédé suivantes :
- collecte de matières résiduelles biogènes avec une teneur variable en substance sèche et séchage aérobie consécutif dans une plage de basses températures jusqu'à maximum 60° - 70°C
- maintien du séchage jusqu'à l'obtention de tout degré de séchage, autorisant une utilisation thermique indépendante en énergie, des matières résiduelles biogènes,
- évacuation de la quantité d'eau évaporée seulement lors du séchage en même temps que le courant d'air humide, sans libération de composés très volatiles,
- stockage intermédiaire primaire des matières résiduelles biogènes séchées, en particulier pour la compensation de différents niveaux de séchage avant un stockage intermédiaire secondaire des matières résiduelles biogènes séchées pour le tamponnage,
- traitement thermique de la marchandise en plusieurs étapes de traitement thermique consécutives,
- évacuation de matières résiduelles de au choix chacune des étapes de traitement thermique,
- récupération d'énergie à partir de l'ensemble des courants de produit évacués du processus, en particulier par le transfert de l'énergie à un agent caloporteur, l'énergie des gaz brûlés étant amenée à un ou plusieurs échangeurs de chaleur pour la récupération optionnelle de courant, de vapeur ou d'eau chaude.

2. Procédé selon la revendication 1, **caractérisé en ce que** de la boue humide ou de la boue pré-séchée, avec une teneur en substance sèche comprise entre 2 % et 35 %, est utilisée comme matériau d'entrée.

3. Procédé selon la revendication 1, **caractérisé en ce que** l'air sec utilisé pour le séchage des matières résiduelles biogènes est préchauffé par la chaleur perdue des étapes de traitement thermique.

4. Procédé selon la revendication 1, **caractérisé en ce que** l'énergie générée à partir du procédé est utilisée pour le traitement thermique des matières résiduelles biogènes.

5. Procédé selon la revendication 1, **caractérisé en ce qu'**une homogénéisation de la marchandise a lieu lors du stockage intermédiaire primaire.

6. Procédé selon la revendication 1, **caractérisé en ce que** du matériau biogène supplémentaire est amené au stockage intermédiaire primaire.

7. Procédé selon la revendication 1, **caractérisé en ce que** des matières résiduelles biogènes séchées sont évacuées du réservoir intermédiaire primaire et sont amenées à une utilisation externe.

8. Procédé selon la revendication 1, **caractérisé en ce que** le traitement thermique comprend au moins une étape de traitement thermique primaire et une étape de traitement thermique secondaire.

9. Procédé selon la revendication 9, **caractérisé en ce que** des produits de substitution sont amenés avant le traitement thermique primaire.

10. Procédé selon la revendication 8 ou 9, **caractérisé en ce que** des produits de substitution sont amenés directement au traitement thermique primaire.

11. Procédé selon la revendication 8, **caractérisé en ce qu'**une stérilisation de la marchandise a lieu dans au moins une des étapes de traitement thermique.

12. Procédé selon la revendication 1, avec une sorption comme étape de nettoyage, **caractérisé en ce que** la sorption s'effectue avec du carbonate de sodium.

13. Procédé selon la revendication 1, **caractérisé en ce que** de l'eau provenant du bassin de décantation est utilisée pour l'épuration des gaz brûlés.

14. Procédé selon la revendication 13, **caractérisé en ce que** les courants de produit sont acheminés pour la sorption à travers le bassin des eaux usées de la station d'épuration.

15. Procédé selon la revendication 13, **caractérisé en ce que** les eaux usées sont injectées dans le courant de produit.

16. Procédé selon la revendication 1, **caractérisé en ce que** l'épuration des gaz brûlés s'effectue par séparation du courant de produit entre ses composants.

17. Procédé selon la revendication 1, **caractérisé en ce que** l'eau chaude est prévue pour le réchauffement de l'air de séchage et de l'air de combustion.

18. Procédé selon la revendication 1, **caractérisé en ce que** l'eau chaude est Utilisée pour la construction d'un réseau de chaleur décentralisé.

19. Dispositif pour la mise en ceuvre du procédé avec des équipements pour le séchage, le stockage, et le traitement thermique consécutif des matières résiduelles biogènes, des systèmes d'échange de chaleur (9) pour la réception et la réutilisation de l'énergie soutirée du système et/ou de l'énergie libérée étant branchés en aval du système de traitement thermique, est **caractérisé en ce qu'**au moins un premier système de nettoyage, de préférence un séparateur de poussière (10) est prévu pour une première épuration des gaz de fumée et un second système de nettoyage (11) pour l'autre épuration des gaz brûlés, de préférence par sorption, **caractérisé en ce que** le dispositif pour le séchage (2) est un système de séchage à basse température travaillant jusqu'à maximum 60° - 70°C, **en ce qu'**une unité de stockage primaire et une unité de stockage secondaire (3, 5) sont prévues pour le stockage intermédiaire des matières résiduelles biogènes séchées, **en ce qu'**un système de transport (4) pour les matières biogènes séchées est prévu entre les unités de stockage (3, 5), **en ce que** des appareils sont prévus pour la sortie de l'air humide et du courant d'eau du système de séchage à basse température (2) et **en ce que** le système de traitement thermique comprend plusieurs zones de traitement (7, 8) thermique.

20. Dispositif selon la revendication 19, **caractérisé en ce que** le système de séchage à basse température (2) comprend un sécheur à air froid ou un sécheur à air frais, un sécheur solaire ou des zones de séchage.

21. Dispositif selon la revendication 19, **caractérisé en ce que** l'unité de stockage primaire (3) pour le stockage intermédiaire est un accumulateur d'homogénéisation.

22. Dispositif selon la revendication 19 ou 21, **caractérisé en ce que** l'unité de stockage (3) primaire comprend un dispositif d'arrivée pour d'autres matières résiduelles biogènes.

23. Dispositif selon la revendication 19 ou 21, **caractérisé en ce que** l'unité de stockage (3) primaire présente un dispositif pour l'évacuation du matériau.

24. Dispositif selon la revendication 19, **caractérisé en ce qu'**une arrivée (6) pour des matières de substitution est prévue entre l'unité de stockage (5) secondaire et le système de traitement (7, 8) thermique.

25. Dispositif selon la revendication 19, **caractérisé en ce que** le système de traitement thermique (7, 8) comprend des brûleurs pour le traitement du gaz naturel et/ou du gaz de curage.

26. Dispositif selon la revendication 19, **caractérisé en ce que** des équipements (1) dotés d'un réglage de température (21, 21') sont prévus pour la transmission d'agent caloporteur au système de séchage à basse température (2) et au système de traitement (7, 8) thermique.

27. Dispositif selon la revendication 19, **caractérisé en ce que** l'épuration des gaz brûlés comprend un système de ventilation (18) guidant les gaz brûlés dans le bassin d'eau décantée (19).

28. Dispositif selon la revendication 19, **caractérisé en ce que** l'épuration des gaz brûlés comprend un système d'injection (L) guidant de l'eau décantée dans le courant de gaz brûlés.

29. Dispositif selon la revendication 19, **caractérisé en ce que** l'épuration des gaz brûlés comprend un dispositif (20) pour la séparation des gaz brûlés entre ses composants (N).

30. Dispositif selon la revendication 26, **caractérisé en ce que** le réglage de température (21, 21') est réalisé en combinaison avec un échangeur de chaleur.

31. Dispositif selon la revendication 29, **caractérisé en ce qu'**une cellule de combustible est prévue pour l'utilisation des composants de gaz brûlés (M) séparés.

32. Dispositif selon la revendication 19, **caractérisé en ce qu'**un appareil (3) est prévu pour le transport d'eau chaude à un dispositif pour l'utilisation d'eau chaude, de préférence un réseau de chaleur décentralisé.
